# FASCICULE DE BREVET EUROPEEN

(11) **EP 0 694 457 B1**
(45) Date de publication et mention de la délivrance du brevet: **09.12.1998**
(21) Numéro de dépôt: 95401748.9
(22) Date de dépôt: 24.07.1995
(51) Int. Cl.: B60S 1/38

(54) **Dispositif d'essuyage perfectionné comportant un déflecteur munie avec une possibilité de déformation sur un balai incorporant une lame souple**
Wischvorrichtung mit einem, auf einem Wischblatt mit flexibler Wischleiste montierten, verformbaren Windabweiser
Wiping device having a deformable deflector mounted on a wiper which incorporates a flexible wiper blade

(30) Priorité: 25.07.1994 FR 9409172
(43) Date de publication de la demande: 31.01.1996
(73) Titulaire: VALEO SYSTEMES D'ESSUYAGE, 78321 La Verrière (FR)
(72) Inventeur: Maubray, Daniel, F-92130 Issy Les Moulineaux (FR); Soucheyre, Corinne, F-63500 Issoire (FR)
(74) Mandataire: Texier, Christian

(56) Documents cités:
- EP-A- 0 410 854
- EP-A- 0 419 328
- EP-A- 0 429 334
- GB-A- 2 106 775

## Description

La présente invention concerne le domaine des dispositifs d'essuyage, destinés notamment à équiper des véhicules automobiles, et encore appelés essuie-glace.

Un essuie-glace comprend classiquement un balai de forme allongée incorporant une lame souple destinée à venir au contact de la surface courbe du pare-brise, montée sur le balai avec une possibilité de déformation dans un plan, de manière à épouser en permanence la courbure du pare-brise.

Il est connu d'équiper le balai d'un déflecteur conformé pour former un masque tendant à dévier l'écoulement des flux d'air pour exercer, à des vitesses élevées du véhicule, une force aérodynamique tendant à maintenir la lame souple au contact du pare-brise. Pour des raisons aérodynamiques, le bord libre du déflecteur doit être proche de la surface du pare-brise. Il ne doit cependant pas venir à son contact, sous peine de laisser des traces noirâtres gênant la visibilité.

On a proposé dans la publication FR-2 650 235 (ou EP-A-0 410 854) de monter, avec une possibilité de déformation, un déflecteur souple sur le balai et de le commander en déformation par la lame souple, de manière à le maintenir proche de la surface du pare-brise tout en évitant qu'il ne râcle celui-ci pour des courbures extrêmes (Voir figures 5 à 7 de FR-A-2 650 235 ou EP-A-0 410 854). On a ainsi fixé le déflecteur souple sur le balai en deux points d'articulation. Ce dispositif d'essuyage connu n'offre toutefois pas entière satisfaction, notamment parce que les articulations sont constituées par des rivets susceptibles de se corroder et de générer un bruit de fonctionnement indésirable après une utilisation prolongée. Le déflecteur tend par ailleurs à se déformer vers l'amont des flux d'air, donc en éloignement de la lame souple, ce qui peut conduire à une mauvaise qualité de l'essuyage.

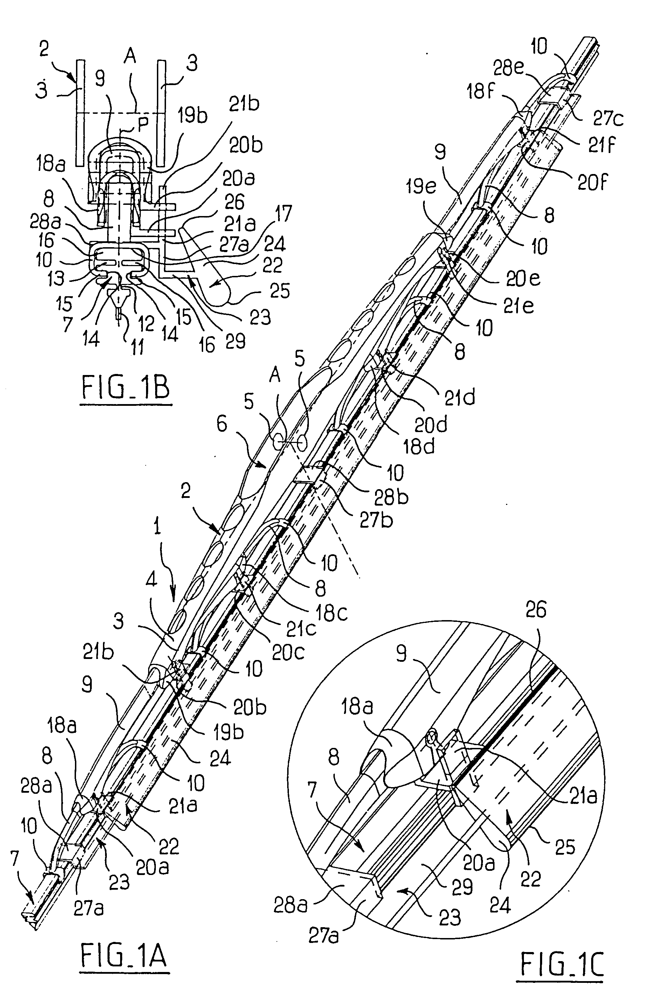

On a également proposé, dans la même publication (Voir figures 1 à 4 de cette publication), d'utiliser un déflecteur non plus souple mais rigide, monté à translation sur le balai au moyen de deux perçages oblongs aptes à se mouvoir sur deux pions portés par le balai. On s'est heurté, dans ce dispositif d'essuyage connu, à des problèmes de blocage du déflecteur lorsque ce dernier se déplace de façon non symétrique par rapport à un plan médian du balai, par coincement des pions dans les perçages oblongs.

La présente invention a pour objet de proposer un dispositif d'essuyage perfectionné, notamment pour un véhicule automobile, qui remédie aux inconvénients des dispositifs d'essuyage connus.

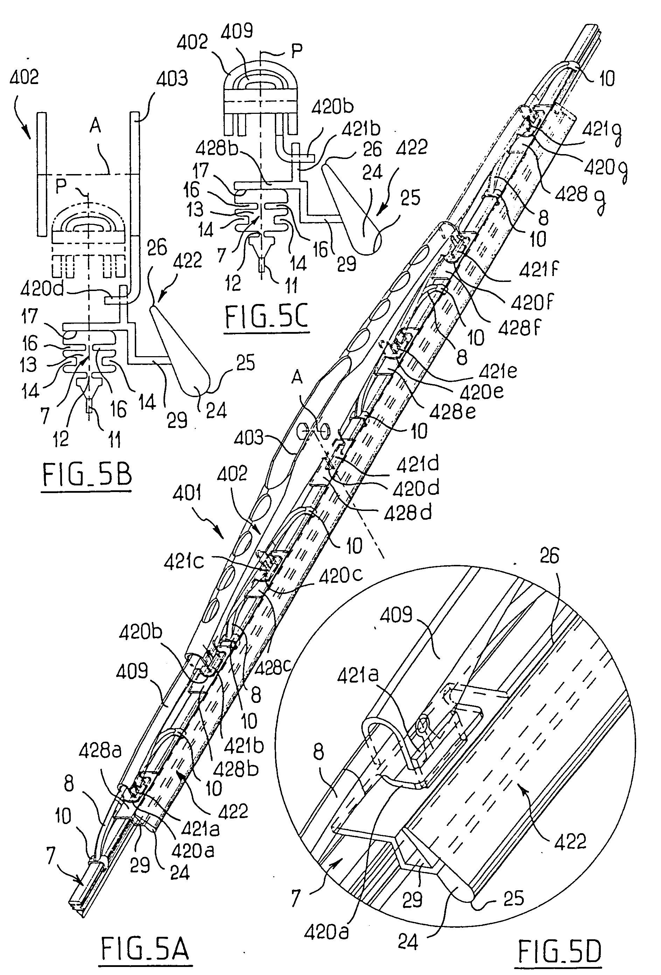

Ce dispositif d'essuyage perfectionné est du type tel que divulgué dans les figures 5 à 7 de la publication mentionnée plus haut, et comprenant :
. un balai de forme allongée, incorporant une lame souple destinée à venir au contact d'une surface courbe à essuyer, cette lame souple étant montée sur le balai avec une possibilité de déformation dans un plan pour épouser la courbure de la surface à essuyer, et
. un déflecteur souple de forme allongée, conformé pour exercer, à des vitesses élevées du véhicule, une force aérodynamique tendant à presser la lame souple sur la surface à essuyer, ce déflecteur étant monté avec une possibilité de déformation sur le balai et étant commandé en déformation par la lame souple,
   le dispositif comporte en au moins trois points de la longueur du balai des moyens de transmission au déflecteur de la déformation de la lame souple, de sorte que le déflecteur accompagne la déformation de la lame souple, et le balai est muni de premiers moyens de guidage et le déflecteur de seconds moyens de guidage, agencés pour coopérer en coulissement avec les premiers moyens de guidage en au moins deux points de la longueur du balai, de préférence au moins trois, et guider le déflecteur en déformation. Selon l'invention, ce dispositif est caractérisé en ce que les seconds moyens de guidage sont agencés pour coopérer en coulissement avec les premiers moyens de guidage. Ce guidage s'effectue avantageusement dans un plan, de préférence un plan sensiblement parallèle au plan de déformation de la lame souple.

Avantageusement, le déflecteur comporte une armature sur un bord longitudinal de laquelle est, de préférence, surmoulé (en variante rapporté) un profilé de préférence en matériau élastomère, les moyens de transmission de la déformation de la lame souple au déflecteur comportant des pattes de préférence venues de formation avec (en variante rapportées sur) l'armature du déflecteur et conformées pour être entraînées en déplacement par la lame souple.

Avantageusement, la lame souple est portée par au moins deux étriers secondaires reliés de façon articulée, autour d'axes de pivotement perpendiculaires au plan de déformation de la lame souple, à un étrier principal. De préférence, la lame souple est portée par quatre étriers secondaires articulés en leur milieu aux extrémités longitudinales de deux étriers intermédiaires, eux-mêmes articulés en leur milieu aux extrémités longitudinales d'un étrier principal.

Dans un premier mode de réalisation de l'invention, le dispositif d'essuyage comporte des pattes de guidage venues de formation avec des pièces d'articulation rapportées sur les extrémités longitudinales d'au moins un étrier, ces pattes de guidage s'étendant latéralement en direction du déflecteur pour former des premiers moyens de guidage.

Dans un second mode de réalisation de l'invention, le dispositif d'essuyage comporte des inserts présentant une partie supérieure à engager sur un tourillon assurant l'articulation entre deux étriers, et une partie inférieure s'étendant latéralement en direction du déflecteur pour former des premiers moyens de guidage.

Dans un troisième mode de réalisation de l'invention, les étriers secondaires étant munis à leurs extrémités longitudinales de griffes de maintien de la lame souple, ces griffes présentent une partie s'étendant latéralement en direction du déflecteur pour former des premiers moyens de guidage.

Dans un quatrième mode de réalisation de l'invention, le dispositif d'essuyage comporte des pattes de guidage portées par la lame souple, ces pattes de guidage s'étendant latéralement en direction du déflecteur pour former des premiers moyens de guidage. Avantageusement, ces pattes de guidage sont portées par des arceaux rapportés chacun sur la lame souple de façon adjacente à une patte de transmission de la déformation de la lame souple au déflecteur.

Dans un cinquième mode de réalisation de l'invention, les étriers présentant deux ailes s'étendant en regard l'une de l'autre et réunies par un dos généralement perpendiculaire aux ailes, un étrier au moins présente au moins une languette venue de formation avec une aile et recourbée à angle droit pour former des premiers moyens de guidage.

Dans les cinq modes de réalisation précités, le dispositif d'essuyage comporte avantageusement des doigts de guidage formant saillie sur l'armature du déflecteur, s'étendant transversalement à la direction longitudinale de cette dernière pour former des seconds moyens de guidage. De préférence, lesdits doigts de guidage sont plans et orientés parallèlement au plan de déformation de la lame souple. En variante, les doigts de guidage sont orientés selon un plan faisant un angle constant avec le plan de déformation de la lame souple. Avantageusement, le dispositif d'essuyage comporte au moins un ajour formé dans une patte de guidage pour recevoir à coulissement un doigt de guidage.

Dans un sixième mode de réalisation de l'invention, lesdits premiers moyens de guidage sont venus de formation avec une plaque en matière plastique rapportée sur le balai et s'étendant généralement parallèlement au plan de déformation de la lame souple. Ces premiers moyens de guidage peuvent être constitués par des perçages oblongs de la plaque, dans lesquels peuvent se déplacer des ergots de guidage portés par l'armature du déflecteur, ces ergots s'étendant parallèlement à l'axe A. En variante, ces premiers moyens de montage peuvent être constitués par des logements formés dans l'épaisseur de la plaque, et dans lesquels peuvent se déplacer des doigts de guidage portés par l'armature du déflecteur, ces doigts de guidage étant généralement plans et perpendiculaires à l'axe.

Avantageusement, la plaque rapportée sur le balai incorpore des moyens de support d'au moins une buse d'arrosage de la surface à essuyer. Enfin, lesdits points de la longueur du balai associés aux moyens de guidage peuvent être au moins au nombre de trois.

D'autres caractéristiques et avantages de la présente invention apparaîtront à la lecture de la description qui va suivre, d'exemples de réalisation non limitatifs de l'invention, et à l'examen du dessin annexé sur lequel :
- la figure 1A est une vue en perspective d'un balai d'essuie-glace conforme à un premier mode de réalisation de l'invention,
- la figure 1B est une vue selon la direction longitudinale du balai représenté sur la figure 1A, montrant en projection dans un plan transversal le positionnement relatif de différents éléments constitutifs du balai,
- la figure 1C montre des détails de réalisation du balai représenté sur la figure 1A,
- la figure 2A est une vue en perspective d'un balai d'essuie-glace conforme à un deuxième mode de réalisation de l'invention,
- la figure 2B montre des détails de réalisation du balai représenté sur la figure 2A,
- la figure 2C est une vue selon la direction longitudinale du balai représenté sur la figure 2B, montrant en projection dans un plan transversal le positionnement relatif de différents éléments constitutifs du balai,
- la figure 3A est une vue en perspective d'un balai d'essuie-glace conforme à un troisième mode de réalisation de l'invention,
- les figures 3B et 3C sont deux vues selon la direction longitudinale du balai représenté sur la figure 3A, montrant en projection dans un plan transversal le positionnement relatif de différents éléments constitutifs du balai,
- la figure 3D montre des détails de réalisation du balai représenté sur la figure 3A,
- la figure 3E montre une griffe de maintien de la lame souple du balai représenté sur la figure 3A, avant formage,
- la figure 4A est une vue en perspective d'un balai d'essuie-glace conforme à un quatrième mode de réalisation de l'invention,
- la figure 4B est une vue selon la direction longitudinale du balai représenté sur la figure 4A, montrant en projection dans un plan transversal le positionnement relatif de différents éléments constitutifs du balai,
- la figure 4C montre des détails de réalisation du balai représenté sur la figure 4A,
- la figure 5A est une vue en perspective d'un balai d'essuie-glace conforme à un cinquième mode de réalisation de l'invention,
- les figures 5B et 5C sont deux vues selon la direction longitudinale du balai représenté sur la figure 5A, montrant en projection dans un plan transversal le positionnement relatif de différents éléments constitutifs du balai,
- la figure 5D montre des détails de réalisation du balai représenté sur la figure 5A,
- la figure 6A est une vue en perspective d'un balai d'essuie-glace conforme à un sixième mode de réalisation de l'invention,
- la figure 6B est une vue selon la direction longitudinale du balai représenté sur la figure 6A, montrant en projection dans un plan transversal le positionnement relatif de différents éléments constitutifs du balai,
- la figure 6C montre des détails de réalisation du balai représenté sur la figure 6A,
- la figure 6D est une vue en perspective montrant isolément la plaque, munie des moyens de guidage du déflecteur, qui est rapportée sur l'étrier principal du balai représenté sur la figure 6A,
- la figure 6E est une vue en perspective d'un balai d'essuie-glace conforme à une variante d'éxécution du sixième mode de réalisation de l'invention,
- la figure 6F montre des détails de réalisation du balai représenté sur la figure 6E,
- la figure 6G est une vue en perspective montrant isolément la plaque, munie de moyens de guidage du déflecteur, qui est rapportée sur l'étrier principal du balai représenté sur la figure 6E,
- la figure 6H est une vue selon la direction longitudinale du balai représenté sur la figure 6E, montrant en projection dans un plan transversal le positionnement relatif de différents éléments constitutifs du balai, et
- la figure 6I est une vue selon la direction longitudinale d'une variante d'éxécution d'un balai conforme au sixième mode de réalisation de l'invention, montrant en projection dans un plan transversal le positionnement relatif de différents éléments constitutifs du balai.

On a représenté sur les figures plusieurs exemples de réalisation d'un balai d'essuie-glace conforme à l'invention. Les balais référencés 1, 101, 201, 301, 401, 501 et 601 sont respectivement équipés de déflecteurs souples référencés 22, 122, 222, 322, 422, 522 et 622. Ces déflecteurs comportent tous un profilé en matériau élastomère surmoulé sur une armature en un matériau plus rigide. Cette armature, bien que rigide, autorise néanmoins une déformation en flexion du déflecteur. Les balais incorporent une lame souple portée par une monture articulée, de manière à pouvoir se déformer dans un plan pour suivre les variations de la courbure de la surface à essuyer. Les balais sont destinés à être montés à pivotement autour d'un axe A à l'extrémité d'un bras d'essuie-glace connu et non représenté, lui-même à entraîner en rotation alternée. Ils présentent une forme allongée, symétrique par rapport à un plan médian contenant l'axe A et perpendiculaire à la direction longitudinale du balai.

Dans la suite de la description, les termes "inférieur", "supérieur", "bas", "haut" seront utilisés pour décrire le balai alors qu'il repose par la lame souple sur une surface plane horizontale, l'axe A étant alors horizontal.

Le balai représenté sur la figure 1A comporte un étrier principal 2, de forme allongée, présentant deux ailes latérales 3 s'étendant en regard l'une de l'autre et réunies supérieurement par un dos 4 généralement perpendiculaire aux ailes. L'étrier principal 2 présente une section transversale en U ouvert vers le bas. Les ailes 3 sont percées en 5 dans la région médiane de l'étrier principal 2 pour la fixation d'un tourillon non représenté, servant de pivot à la liaison d'axe A reliant le balai 1 et le bras d'essuie-glace. Le dos 4 est ajouré en 6 dans la région médiane de l'étrier principal 2 pour le passage d'une pince portée par le bras d'essuie-glace, venant s'engager élastiquement par le dessus sur le tourillon.

Le balai 1 comporte une lame souple d'essuyage 7 destinée à venir au contact du pare-brise. Cette lame souple 7 est portée par le balai 1 avec une possibilité de déformation dans un plan perpendiculaire à l'axe A pour épouser en permanence la courbure du pare-brise, quelle que soit la position angulaire du bras d'essuie-glace. Plus précisément, la lame souple 7 est portée par quatre étriers secondaires 8, eux-mêmes portés par deux étriers intermédiaires 9 soutenus par l'étrier principal 2. Chaque étrier intermédiaire 9 s'articule en son milieu, autour d'un axe de rotation parallèle à l'axe A, à une extrémité longitudinale de l'étrier principal 2, entre les ailes 3 de celui-ci. Chaque étrier secondaire 8 s'articule en son milieu, autour d'un axe de rotation parallèle à l'axe A, à une extrémité longitudinale d'un étrier intermédiaire 9, entre les ailes de celui-ci. Les étriers intermédiaires 9 et les étriers secondaires 8 présentent chacun, en projection dans la direction de l'axe A, une forme généralement arquée vers le bas et, en coupe dans un plan parallèle au plan médian, une section transversale en U ouvert vers le bas. Les étriers secondaires 8 sont munis, à leurs extrémités longitudinales, de griffes 10 qui viennent enserrer latéralement par le dessus la lame souple 7.

La lame souple 7 est symétrique par rapport à un plan P perpendiculaire à l'axe A. Elle comporte, comme représenté plus particulièrement sur la figure 1B, une lèvre d'essuyage 11 en partie inférieure, effilée vers le bas et destinée à venir au contact de la surface à essuyer. La lèvre 11 est reliée supérieurement, par un pont de matière formant charnière 12, à une embase cannelée 13. Cette dernière présente deux cannelures 14 dans lesquelles s'engagent des bords inférieurs 15, recourbés l'un vers l'autre, des griffes 10. Deux autres cannelures 16 plus profondes que les cannelures 14 et ménagées au-dessus de ces dernières peuvent recevoir de façon connue en soi une tringle de rigidification de la lame souple 7, généralement en acier inoxydable. L'embase 13 est délimitée supérieurement par un dos 17 généralement plat, parallèle à l'axe A. La lame souple 7 est maintenue par les griffes 10 en huit points, assez régulièrement répartis sur sa longueur, et elle peut se déformer dans un plan perpendiculaire à l'axe A pour suivre les variations de la courbure du pare-brise, grâce au pivotement des étriers secondaires 8 et des étriers intermédiaires 9 autour d'axes parallèles à l'axe A.

Dans l'exemple décrit, l'articulation des étriers secondaires 8 sur les étriers intermédiaires 9 s'effectue au moyen de pièces d'articulation 18a, 18c, 18d et 18f rapportées sur l'étrier intermédiaire 9. De même, l'articulation des étriers intermédiaires 9 sur l'étrier principal 2 s'effectue au moyen de pièces d'articulation 19b et 19e rapportées sur l'étrier principal 2. Ces pièces d'articulation sont de préférence fabriquées en matière plastique. Elles présentent alors l'avantage, lorsque les étriers sont réalisés en métal, d'éviter un contact direct métal-métal pouvant être source de bruit.

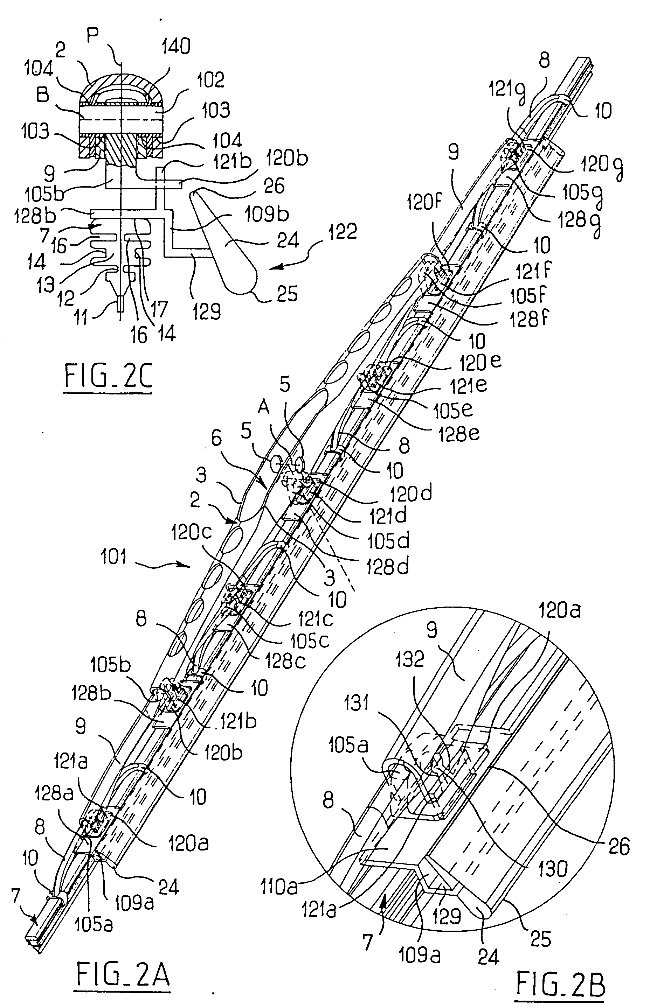

Chaque pièce d'articulation s'engage à une extrémité longitudinale d'un étrier entre les ailes de celui-ci. Elle peut être maintenue en place après son insertion entre les ailes de l'étrier en rabattant une ou plusieurs des languettes venues de formation avec celles-ci ou avec le dos de l'étrier. On peut également munir chaque pièce d'articulation de moyens de retenue élastiques, tels qu'une ou plusieurs languettes élastiques, aptes à se déformer élastiquement lors de l'insertion entre les ailes de l'étrier et, au terme de cette insertion, à s'engager dans un ou plusieurs évidements de retenue formés sur l'étrier. On se réfèrera utilement à la publication FR-2 630 070 qui décrit de tels moyens de retenue élastiques. Chaque pièce d'articulation présente des faces en vis-à-vis sur lesquelles deux parois cylindriques de révolution forment saillie, pour servir de pivot d'axe parallèle à l'axe A à un étrier engagé entre elles. Un tourillon est avantageusement engagé dans ces parois cylindriques comme cela sera décrit plus précisément en référence aux figures 2B et 2C.

Le déflecteur souple 22 équipant le balai 1 est disposé du côté de celui-ci situé en amont de la lame souple 7, dans le sens d'écoulement des flux d'air sur le pare-brise.

Conformément à un premier mode de réalisation de l'invention, chaque pièce d'articulation présente une patte de guidage, de préférence venue de moulage avec elle, s'étendant en direction du déflecteur 22 et ajourée pour guider en coulissement un doigt de guidage solidaire de celui-ci. Chaque patte de guidage s'étend généralement perpendiculairement au plan médian du balai 1 et parallèlement à l'axe A. On a attribué aux pattes de guidage les références 20a, 20b, 20c, 20d, 20e et 20f suivant l'ordre dans lequel elles se situent, en partant d'une extrémité longitudinale du balai 1. Les pattes de guidage 20a, 20c et 20d, 20f sont respectivement portées par les pièces d'articulation 18a, 18c, 18d et 18f rapportées sur les étriers intermédiaires 9 pour servir de pivot aux étriers secondaires 8. Les pattes de guidage 20b et 20e sont portées par les pièces d'articulation 19b et 19e rapportées sur l'étrier principal 2 pour servir de pivot aux étriers intermédiaires 9.

Les doigts de guidage du déflecteur 22 traversant les ajours des pattes de guidage 20a, 20b, 20c, 20d, 20e et 20f sont respectivement référencés 21a, 21b, 21c, 21d, 21e et 21f.

Le déflecteur 22 présente une armature 23, de préférence en matière plastique rigide, s'étendant généralement parallèlement à la lame souple 7 sur la majeure partie de cette dernière. L'armature 23 présente une portion principale 29, plane lorsque le balai repose sur une surface plane, et s'étendant parallèlement à l'axe A. Un profilé 24 de préférence en matériau élastomère est surmoulé sur un bord longitudinal de la portion principale 29. En variante, le profilé 24 est rapporté par tout moyen de fixation approprié sur la portion principale de l'armature. Le profilé 24 est conformé pour former un masque tendant à dévier les flux d'air et exercer, à des vitesses élevées du véhicule, une force aérodynamique tendant à maintenir la lame souple 7 au contact du pare-brise. Il présente, en section transversale, un bord inférieur 25 arrondi, situé à proximité de la surface à essuyer, prolongé vers l'aval, c'est-à-dire dans le sens d'écoulement des flux d'air, par une partie s'étendant en oblique vers le haut en s'amincissant, terminée par un bord supérieur 26 arrondi. La portion principale 29 se raccorde sur le profilé 24 à peu près à mi-hauteur de ce dernier. Elle s'étend axialement légèrement au-delà des extrémités longitudinales du profilé 24, comme on peut le remarquer sur la figure 1A. Des montants 27a, 27b, 27c venus de moulage avec l'armature 23, se raccordent à leur partie inférieure perpendiculairement sur la face de la portion principale 29 qui est opposée à la surface à essuyer, et se situent le long du bord longitudinal de cette dernière qui est opposé au profilé 24. Les montants 27a, ..., 27c sont prolongés à leur partie supérieure, à angle droit en éloignement du profilé 24, par des pattes de transmission de la déformation de la lame souple 7 au déflecteur 22. Dans l'exemple décrit, trois pattes de transmission 28a, 28b et 28c sont formées, respectivement aux extrémités longitudinales de la portion principale 29 et en son milieu. Ces pattes 28a, 28b et 28c sont planes, et s'étendent parallèlement à la portion principale 29. La hauteur des montants 27a, ..., 27c est choisie de sorte que, lorsque le balai 1 repose sur une surface plane, les faces des pattes situées du côté de cette surface viennent à effleurement du dos 17 de la lame souple 7, de manière à pouvoir être entraînées en déplacement par cette dernière. Le déflecteur 22 est ainsi commandé en déformation, dans l'exemple décrit, dans un plan perpendiculaire à l'axe A par la lame souple 7, par l'intermédiaire des pattes de transmission 28a, 28b et 28c. Les doigts de guidage 21a, ..., 21f précités sont venus de moulage avec l'armature 23 et se raccordent perpendiculairement sur la portion principale 29, le long du bord longitudinal de cette dernière opposé au profilé 24. Ils présentent une section transversale, dans un plan de coupe parallèle à l'axe A et perpendiculaire au plan médian du balai, rectangulaire, de grand côté parallèle à la direction longitudinale du balai. Les six doigts de guidage du déflecteur 22 sont situés par groupe de trois entre les pattes de transmission 28a, 28b et entre les pattes de transmission 28b et 28c.

Durant le fonctionnement de l'essuie-glace, lorsque la courbure de la surface à essuyer augmente, la région médiane de la lame souple 7 s'élève au-dessus des régions d'extrémités. La patte de transmission 28b située dans la région médiane est soulevée par le dos 17 de la lame souple 7 et les doigts de guidage 21c et 21d immédiatement les plus proches de cette patte de transmission 28b s'enfoncent dans les ajours des pattes de guidage 20c et 20d. Les doigts de guidage 21a et 21f situés aux extrémités longitudinales du déflecteur 22 tendent à entraînés dans un mouvement inverse. Lorsqu'au contraire la courbure de la lame souple 7 diminue, les doigts de commande 21c et 21d les plus centraux ont tendance à descendre dans les ajours des pattes de guidage 20c et 20d tandis que les doigts de commande 21a et 21f situés aux extrémités s'enfoncent dans les ajours des pattes de guidage 20a et 20f.

L'invention permet ainsi au déflecteur 22 de suivre les déformations de la lame souple 7 sans risque de bloquage ou de bruit de fonctionnement indésirable. On garantit une bonne qualité d'essuyage même à des vitesses élevées du véhicule, sans risque de contact direct du déflecteur avec la surface à essuyer.

Le texte qui suit concerne d'autres modes de réalisation de l'invention ; ces derniers incorporent des éléments constitutifs identiques à certains éléments qui viennent d'être décrits en référence aux figures 1A à 1C. La description de ces éléments ne sera pas reprise et l'on se contentera de leur attribuer des références identiques. Il est bien entendu que si cela est nécessaire, les passages du texte situés plus haut et décrivant ces éléments pourront être repris et incorporés dans la suite.

On a représenté en perspective sur la figure 2A le balai d'essuie-glace 101 conforme à un deuxième mode de réalisation de l'invention.

Chaque étrier intermédiaire 9 s'articule en son milieu à une extrémité longitudinale de l'étrier principal 2 au moyen d'une pièce d'articulation 140 et d'un tourillon 102 d'axe B parallèle à l'axe A. Plus précisément, comme représenté sur la figure 2C, la pièce d'articulation 140 présente des parois 103 et 104 cylindriques de révolution autour de l'axe B, engagées dans des perçages ménagés sur les ailes des étriers intermédiaires 9 et principal 2. La paroi des ailes bordant inférieurement ces perçages est avantageusement découpée pour former des ouvertures de mise en place de la pièce d'articulation 140. Chaque ouverture présente, comme pour celle référencée 130 de l'étrier intermédiaire 9 représenté sur la figure 2B, deux bords 131 et 132 convergeant vers le haut en direction de l'axe B, destinés à faciliter l'introduction de la pièce d'articulation 140 par le bas.

Le montage des étriers secondaires 8 sur les étriers intermédiaires 9 s'effectue de façon analogue à celui des étriers intermédiaires 9 sur l'étrier principal 2.

Le déflecteur 122 équipant le balai représenté sur la figure 2A comporte un profilé 24, de préférence en matière élastomère et surmoulé sur une armature 123 en matière plastique rigide. L'armature 123 comporte une portion principale 129 se distinguant de celle précédemment décrite par le fait que sa longueur est la même que celle du profilé 24.

Conformément au deuxième mode de réalisation de l'invention, des inserts 105b, 105f venus de moulage en matière plastique sont insérés entre les ailes des étriers intermédiaires 9, ces inserts se prolongeant latéralement vers le déflecteur 122 pour former des pattes de guidage respectivement référencées 120b et 120f. Des inserts 105a, 105c, 105e et 105g sont insérés entre les ailes des étriers secondaires 8 au niveau de leur articulation avec un étrier intermédiaire 9 et sont traversés à leur partie supérieure par les tourillons d'articulation des étriers secondaires 8 sur les étriers intermédiaires 9. Les inserts 105b et 105f engagés entre les ailes des étriers intermédiaires 9 sont traversés à leur partie supérieure par les tourillons d'articulation 102 des étriers intermédiaires 9 sur l'étrier principal 2. Un insert 105d est engagé entre les ailes de l'étrier principal 2 et il est maintenu en place, à la différence des autres inserts, par un élément de fixation cylindrique ne servant pas d'articulation, s'étendant entre les ailes 3 de l'étrier principal 2, parallèlement à l'axe A et dans le plan médian du balai 101.

Chaque insert présente en section dans un plan parallèle au plan médian du balai la forme d'un L comme représenté sur la figure 2C, le pied du L formant ladite patte de guidage.

La portion principale 129 du déflecteur 122 est munie, sur son bord longitudinal opposé au profilé 24, de montants s'étendant perpendiculairement à l'axe A. Ces montants se raccordent sur la face de la portion principale 129 opposée à la surface à essuyer et sont au nombre de sept dans l'exemple de réalisation décrit. Ils sont respectivement situés sur la longueur de la portion principale 129 au même niveau que les inserts 105a, 105b, 105c, 105d, 105e, 105f et 105g. Seuls les montants référencés 109a et 109g respectivement situés au même niveau que les inserts 105a et 105g apparaissent sur les figures. Les montants sont prolongés supérieurement à angle droit, du côté opposé au profilé 24, par des pattes de transmission de la déformation de la lame souple 7 au déflecteur. Ces pattes de transmission sont respectivement référencées 110a, 110b, 110c, 110d, 110e, 110f et 110g pour les montants respectivement associés aux inserts 105a, 105b, 105c, 105d, 105e, 105f et 105g. La hauteur des montants est choisie de sorte que, lorsque le balai repose sur une surface plane les faces des pattes de transmission situées du côté de cette surface viennent à affleurement du dos 17 de la lame souple 7. Des doigts de guidage, référencés 121a, 121b, 121c, 121d, 121e, 121f et 121g sont respectivement portés par les pattes de transmission 110a, 110b, 110c, 110d, 110e, 110f et 110g. Chaque doigt de guidage est orienté perpendiculairement au plan de la patte de transmission qui le porte, et se raccorde sur cette dernière à proximité du montant qui la relie à la portion principale 129. Les pattes 120a, ..., 120g des inserts 105a, ..., 105g sont ajourées pour le passage des doigts de guidage 121a, ..., 121g. Dans l'exemple décrit, ces derniers présentent en coupe, dans un plan perpendiculaire au plan médian du balai et parallèle à l'axe A, une section rectangulaire de grand côté parallèle à la direction longitudinale du balai. Les ajours des pattes 120a, ..., 120g des inserts 105a, ..., 105g présentent une section rectangulaire complémentaire.

Le principe de fonctionnement du balai d'essuie-glace 101 représenté sur les figures 2A à 2C est le même que celui du balai représenté sur les figures 1A à 1C. Lorsque la courbure du pare-brise varie, la lame souple 7 se déforme et entraîne, par l'intermédiaire des pattes de transmission 110a, ..., 110g, le déflecteur 122 en déformation dans un plan parallèle au plan de déformation de la lame souple 7.

Grâce au grand nombre de points de guidage en coulissement, on assure que le déflecteur 122 se déforme dans un plan parallèle au plan de déformation de la lame souple 7. Dans ce deuxième mode de réalisation, les emplacements des pattes 128a, ..., 128g de transmission de la déformation de la lame souple 7 au déflecteur 122 coincident avec les emplacements des points de guidage en coulissement du déflecteur 122 sur le balai 101.

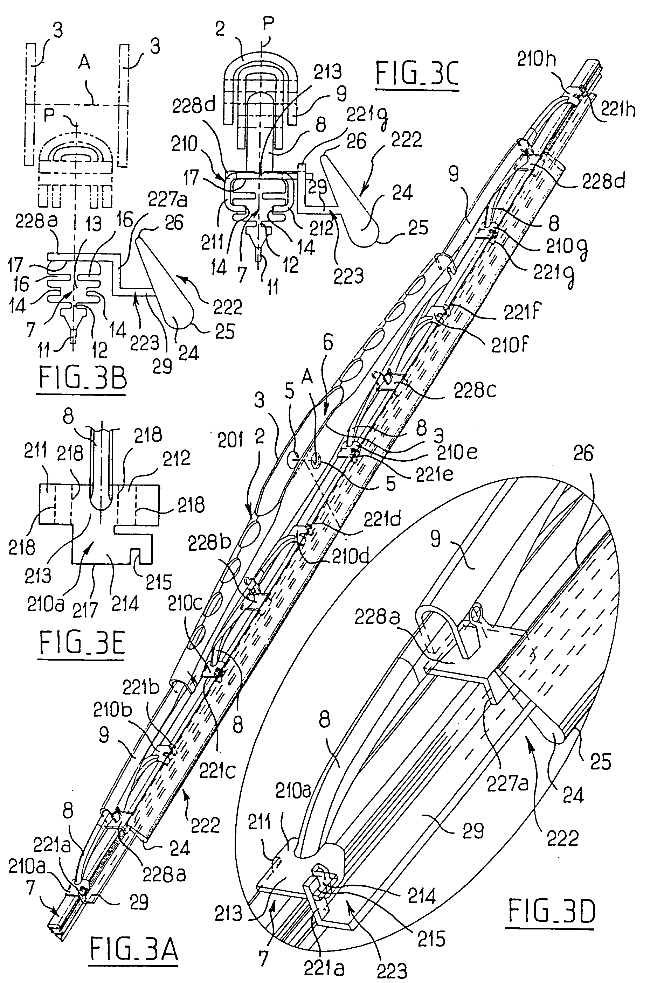

On a représenté en perspective sur la figure 3A le balai d'essuie-glace 201 conforme à un troisième mode de réalisation de l'invention. Le déflecteur 222 équipant ce balai comporte comme dans les réalisations précédentes une armature rigide 223 présentant une portion principale 29 sur un bord longitudinal de laquelle est surmoulé un profilé 24 en matériau élastomère.

Le déflecteur 222 est guidé en coulissement en huit points répartis sur sa longueur par des doigts de guidage respectivement référencés 221a, 221b, 221c, 221d, 221e, 221f, 221g et 221h, suivant l'ordre dans lequel ils se situent en partant d'une extrémité longitudinale du balai 201. Les doigts de guidage 221a, ..., 221h se raccordent perpendiculairement sur la portion principale 29. Ils présentent, en coupe dans un plan perpendiculaire au plan médian du balai 201 et parallèle à l'axe A, une section transversale rectangulaire, de grand côté parallèle à la direction longitudinal du balai. Ils sont guidés en coulissement dans des ajours de forme rectangulaire complémentaire, ménagés sur des griffes respectives 210a, 210b, 210c, 210d, 210e, 210f, 210g et 210h, de maintien de la lame souple 7. Les griffes 210a, ..., 210h se situent aux extrémités longitudinales des étriers secondaires 8 et présentent deux parties latérales 211 et 212 recourbées l'une en direction de l'autre, qui viennent enserrer par le dessus l'embase cannelée 13 de la lame souple 7, pour s'engager dans les cannelures 14 de cette dernière. Les parties latérales 211 et 212 sont pliées autour de lignes de pliage 218 parallèles à l'axe longitudinal de la lame souple 7, comme représenté sur la figure 3E. Elles sont réunies par une portion centrale plane 213 formant le dos de la griffe. La portion centrale 213 se prolonge en éloignement de l'étrier 8 qui porte la griffe, puis s'étend latéralement dans un même plan, en direction du déflecteur 222 pour former une patte de guidage 214. Les pattes de guidage 214 sont munies sur leur bord longitudinal 217 le plus éloigné de l'étrier 8 d'une encoche 215 rectangulaire, destinée à recevoir un doigt de guidage du déflecteur 222.

Quatre pattes de transmission de la déformation de la lame souple 7 au déflecteur 222, respectivement référencées 228a, 228b, 228c et 228d, sont formées sur l'armature 223 du déflecteur 222 en des emplacements respectivement situés, lorsque le balai 201 repose sur une surface plane horizontale, à l'aplomb des articulations des étriers secondaires 8 sur les étriers intermédiaires 9. Ces pattes de transmission de mouvement 228a, ..., 228d, généralement perpendiculaires au plan médian du balai et parallèles à l'axe A, se raccordent sur la portion principale 29 de l'armature 223 par des montants s'étendant perpendiculairement à l'axe A. Sur les figures, seul apparaît le montant 227a reliant la patte de transmission 228a à la portion principale 29. La hauteur des montants est choisie de sorte que lorsque le balai 201 repose sur une surface plane, les faces des pattes de transmission situées du côté de cette surface viennent à affleurement du dos 17 de la lame souple 7.

Le fonctionnement du balai 201 est semblable à celui des modes de réalisation précédents, à savoir qu'en fonction de la courbure de la surface à essuyer, la lame souple 7 se déforme dans un plan perpendiculaire à l'axe A, et entraîne par l'intermédiaire des pattes de transmission 228a, ..., 228d, le déflecteur 222 en déformation dans un plan parallèle au plan de déformation de la lame souple 7.

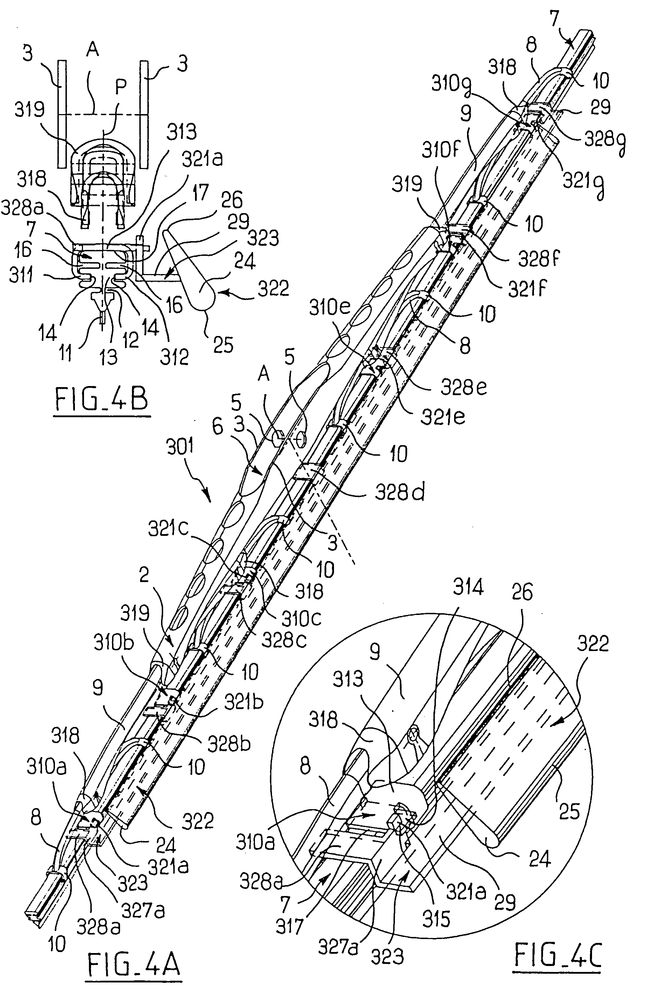

On a représenté sur la figure 4A le balai d'essuie-glace 301 conforme à un quatrième mode de réalisation de l'invention. L'articulation des étriers intermédiaires 9 aux extrémités longitudinales de l'étrier principal 2 s'effectue au moyen de pièces d'articulation 319 généralement identiques aux pièces d'articulation 19a et 19e précédemment décrites, hormis l'absence dans les pièces d'articulation 319 des pattes de guidage venues de formation avec elles. De même, les pièces d'articulation 318 servant de liaison articulée entre les étriers secondaires 8 et les étriers intermédiaires 9 sont généralement identiques aux pièces d'articulation 18a, 18c, 18d et 18f précédemment décrites, hormis l'absence de pattes de guidage venues de formation avec elles. Le déflecteur 322 équipant le balai 301 comporte une armature 323 en matière plastique rigide, présentant une portion principale 29 sur laquelle est surmoulé un profilé 24 en matière élastomère.

L'armature 323 du déflecteur 322 porte sept pattes de transmission de la déformation de la lame souple 7 au déflecteur 322, respectivement référencées 328a, 328b, 328c, 328d, 328e, 328f et 328g, dans l'ordre dans lequel elles se situent en partant d'une extrémité longitudinale du balai 301. Les pattes de transmission 328a, ..., 328g s'étendent généralement parallèlement à l'axe A et perpendiculairement au plan médian du balai 301. Elles se raccordent sur la portion principale 29 de l'armature 323 par des montants orientés perpendiculairement à l'axe A. On aperçoit sur la figure 4C le montant 327a supportant la patte 328a. Les montants se raccordent perpendiculairement à leur partie inférieure sur la portion 29, le long du bord longitudinal de cette dernière, opposé au profilé 24. Les pattes de transmission 328a, ..., 328g se raccordent perpendiculairement sur la face des montants située à l'opposé du profilé 24, et à une hauteur telle que, lorsque le balai 301 repose sur une surface plane, la face des pattes de transmission située du côté de cette surface vienne à affleurement du dos 17 de la lame souple 7. Les pattes de transmission présentent dans un plan perpendiculaire à l'axe A, une section rectangulaire constante. La dimension des pattes de transmission 328a, 328b et 328c, mesurée parallèlement à la direction longitudinale du balai, est inférieure à celle des montants qui les portent. Ces derniers sont prolongés vers le haut, sur leur partie libre, par des doigts de guidage 321a, 321b et 321c. La patte de transmission 328d, située sensiblement à l'aplomb de l'axe A, lorsque le balai repose sur une surface plane horizontale, ne porte pas de doigt de guidage. Les doigts de guidage 321a, 321b, 321c sont situés, sur les montants qui les portent, du côté tourné vers le centre du balai de même, par symétrie, les doigts de guidage 321e, 321f et 321g prolongeant vers le haut les montants portant les pattes de transmission 328e, 328f et 328g sont situés du côté tourné vers le centre du balai.

Des arceaux dans lesquels sont montés à coulissement les doigts de guidage sont rapportés sur la lame souple 7. Ces arceaux, respectivement associés aux doigts de guidage 321a, 321b, 321c, 321e, 321f et 321g sont référencés 310a, 310b, 310c, 310e, 310f et 310g. Ils sont formés comme les griffes 210a, ..., 210h précédemment décrites, par découpe et pliage. A la différence des dernières, ils ne sont toutefois pas fixés aux extrémités longitudinales des étriers secondaires 8, mais sont simplement portés par la lame souple 7. Ainsi, le déflecteur 322 est en fait directement porté par la lame souple 7. Chaque arceau présente deux parois latérales 311 et 312 recourbées en direction l'une de l'autre, selon des lignes de pliage parallèles à la direction longitudinale du balai vers le bas pour s'engager dans les cannelures 14 de la lame souple 7. Les parois latérales 311 et 312 sont reliées par une région centrale plane 313 venant couvrir le dos 17 de la lame souple 7. Cette région centrale 313 se prolonge selon la direction longitudinale du balai, d'un côté des parois latérales 311 et 312, puis s'étend latéralement pour former une patte de guidage 314 située dans le plan de la région centrale 313. La paroi 314 est découpée en 315 sur son bord longitudinal 317 situé à l'opposé des parois latérales 311 et 312 pour recevoir un doigt de guidage. Les arceaux 310a, ..., 310g sont disposés sur la lame souple 7 à proximité des pattes de transmission 328a, ..., 328c, 328d, ..., 328f, de manière que les doigts de guidage 321a, ..., 321c, 321d, ..., 321g s'engagent dans les découpes ménagées sur les bords longitudinaux 317 des pattes de guidage 314 des arceaux.

Le fonctionnement du balai 301 est semblable à celui des balais précédemment décrits. Lorsque la lame souple 7 se déforme pour suivre les variations de courbure du pare-brise, le déflecteur souple 322 se déforme dans un plan parallèle au plan de déformation de la lame souple 7.

On a représenté sur la figure 5A le balai 401 conforme à un cinquième mode de réalisation de l'invention. Ce balai 401 comporte un étrier principal 402 généralement semblable à l'étrier principal 2 précédemment décrit, hormis le fait que l'aile 403 située du côté du déflecteur 422 se prolonge sur son bord inférieur, à l'aplomb de l'axe A lorsque le balai 401 repose sur une surface plane horizontale, par une languette recourbée en direction de l'autre aile pour former une patte de guidage 420d destinée à guider en coulissement un doigt de guidage du déflecteur 422, comme représenté plus particulièrement sur la figure 5B.

Les étriers intermédiaires 409 sont généralement identiques aux étriers intermédiaires 9 précédemment décrits, hormis le fait que les étriers 409 portent des languettes venues de formation avec les ailes et servant à guider en déformation le déflecteur 422.

L'aile de chaque étrier intermédiaire 409 située du côté opposé au déflecteur 422 se prolonge, à chaque extrémité longitudinale et sur son bord inférieur, par une languette recourbée en direction de l'autre aile, passant sous le bord inférieur de cette dernière et se prolongeant au-delà de celui-ci pour former une patte de guidage destinée à guider en coulissement un doigt de guidage du déflecteur. L'aile de chaque étrier intermédiaire 409 située du côté du déflecteur se prolonge sur son bord inférieur, à mi-longueur de l'étrier, par une languette recourbée en direction du déflecteur 422 pour former une patte de guidage destinée à guider en coulissement un doigt de guidage du déflecteur. Des étriers secondaires 8 identiques à ceux précédemment décrits s'articulent aux extrémités longitudinales des étriers intermédiaires 409.

Le déflecteur 422 comporte une armature rigide présentant une portion principale 29 sur laquelle se raccordent, par l'intermédiaire de montants perpendiculaires à celle-ci, sept pattes de transmission de déformation de la lame souple 7 au déflecteur 422, respectivement référencées 428a, 428b, 428c, 428d, 428e, 428f et 428g, dans l'ordre dans lequel elles se situent en partant d'une extrémité longitudinale du balai 401. Ces pattes de transmission s'étendent parallèlement à l'axe A et perpendiculairement au plan médian du balai 401. Elles portent chacune, en leur milieu suivant la direction longitudinale du déflecteur, et à proximité du montant par lequel elles se raccordent sur la portion principale 29, un doigt de guidage s'étendant vers le haut perpendiculairement au plan de la patte de transmission. Les doigts de guidage présentent en section dans un plan perpendiculaire au plan médian du balai et parallèle à l'axe A une section rectangulaire, de grand côté parallèle à la direction longitudinale du balai 401. Les doigts de guidage sont respectivement référencés 421a, 421b, 421c, 421d, 421e, 421f et 421g. On a respectivement référencé 420a, 420b, 420c, 420d, 420e, 420f et 420g les pattes de guidage formées sur les ailes des étriers et ajourées pour le guidage à coulissement de ces doigts de guidage. Les pattes de guidage 420a et 420c, 420e et 420g sont formées, par pliage, dans le cas d'un étrier métallique, ou par moulage dans le cas d'un étrier en matière plastique, au niveau des extrémités longitudinales des étriers intermédiaires 409, sur les ailes de ces derniers situées à l'opposé du déflecteur 422. Plus particulièrement, comme représenté sur la figure 5C, les pattes de guidage 420b et 420f sont formées sur la paroi des étriers intermédiaires 409 située du côté du déflecteur 422, comme représenté plus particulièrement sur la figure 5C. Lorsque cela est possible, on préfère un pliage d'une languette dans la direction de l'aile opposée car l'opération de pliage ést facilitée. C'est le cas pour les pattes 421a, 421c, 421e et 421g.

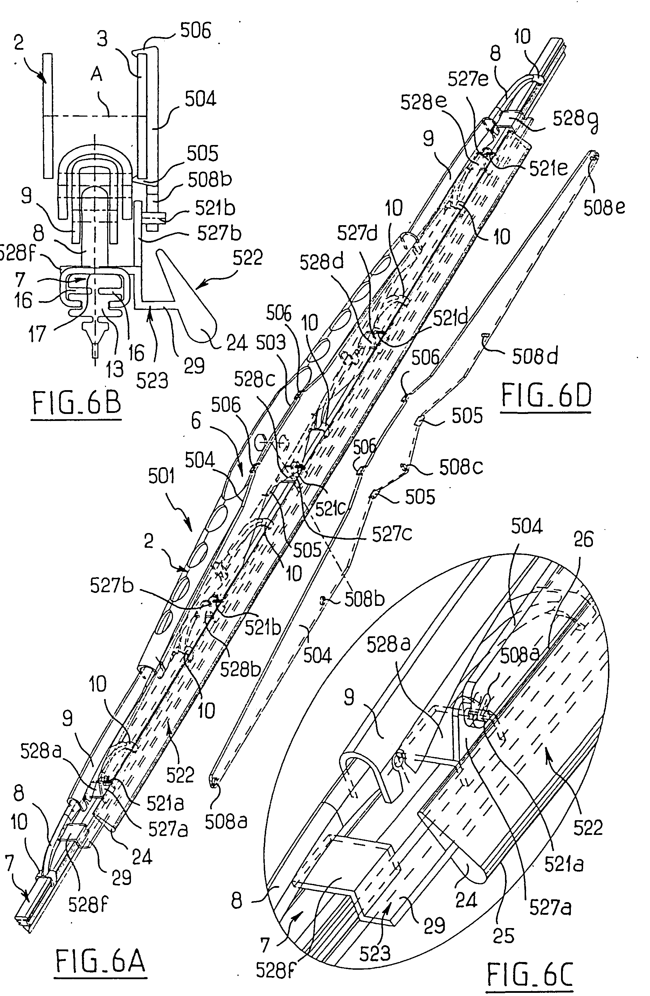

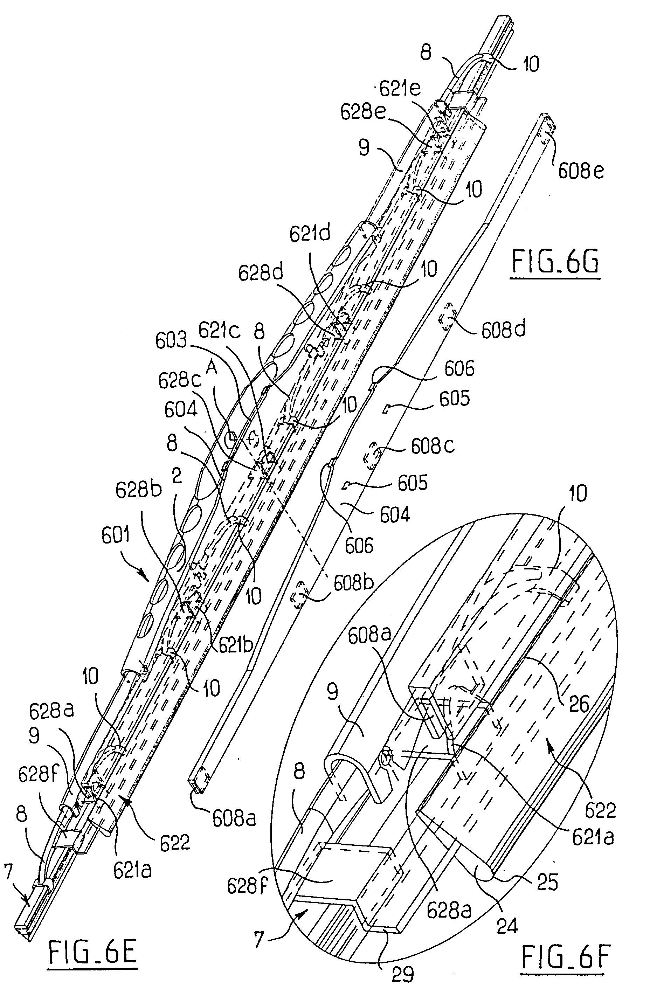

On a représenté sur les figure 6A et 6E deux variantes d'exécution d'un balai d'essuie-glace conforme à un sixième mode de réalisation de l'invention.

Le balai 501 représenté en perspective sur la figure 6A comporte un étrier principal 2 sur lequel est rapportée une plaque 504 destinée au guidage du déflecteur 522 en déformation dans un plan parallèle au plan de déformation de la lame souple 7.

La plaque 504 est destinée à être rapportée sur la face externe de l'aile 3 de l'étrier principal 2 située du côté du déflecteur 522. Elle s'étend au-delà des extrémités longitudinales de l'étrier principal 2 pour venir masquer en grande partie les étriers intermédiaires 9, jusqu'au voisinage des extrémités longitudinales de ceux-ci, comme représenté plus particulièrement sur la figure 6C. La plaque 504 présente dans sa région médiane un contour en V saillant vers le bas et s'étendant en dessous du bord inférieur de l'aile 3 de l'étrier principal 2. La plaque 504 comporte, sur sa face par laquelle elle est rapportée sur l'aile 3, deux couples 505 et 506 de languettes d'accrochage destinées à venir s'accrocher sur les bords inférieur et supérieur de l'aile 503 dans la région médiane de l'étrier principal 2.

Cinq perçages oblongs sont ménagés à travers l'épaisseur de la plaque 504. Ces perçages sont respectivement référencés 508a, 508b, 508c, 508d, 508e suivant l'ordre dans lequel ils apparaissent en partant d'une extrémité longitudinale de la plaque 504. Le perçage 508c se situe au voisinage du sommet du V précité, sous le bord inférieur de l'aile 3 qui porte la plaque 504. Le perçage 508c présente deux bords rectilignes parallèles entre eux et au plan médian du balai 501, reliés inférieurement et supérieurement par des bords arrondis opposés. Les perçages 508b et 508d sont symétriques l'un de l'autre par rapport au plan médian du balai 501 et présentent chacun des bords rectilignes parallèles. Les perçages 508b et 508d s'étendent en oblique vers le haut sur la figure 6A, en rapprochement l'un de l'autre. Les perçages 508b et 508d se situent à environ un sixième de la longueur de l'étrier principal 2, en partant des extrémités longitudinales de celui-ci lorsque la plaque 504 est en place sur l'étrier principal 2. Les perçages 508a et 508e se situent à proximité des extrémités longitudinales de la plaque 504. Les perçages 508a et 508e présentent chacun des bords rectilignes parallèles. Les perçages 508a et 508e sont inclinés davantage que les perçages 508b et 508d, par rapport à la direction du plan médian du balai 501.

Les perçages 508a, ..., 508e reçoivent des ergots référencés respectivement 521a, ..., 521e pour guider le déflecteur 522 à déplacement dans un plan perpendiculaire à l'axe A et parallèle au plan de déformation de la lame souple 7.

Les ergots 521a, ..., 521e présentent une forme cylindrique de révolution chacun autour d'un axe parallèle à l'axe A, et se raccordent à leur extrémité située du côté opposé au profilé 24 sur des montants respectifs référencés 527a, ..., 527e. Ces derniers se raccordent perpendiculairement à leur partie inférieure sur la portion principale 29 de l'armature du déflecteur 522. Les ergots 521a, 521b, 521d et 521e sont maintenus dans les perçages 508a, 508b, 508d et 508e par butée de la face des montants, opposée à la face sur laquelle se raccordent les ergots, contre la surface externe de l'aile des étriers située du côté du déflecteur 522.

Des pattes de transmission de déformation de la lame souple 7, référencées respectivement 528a, ..., 528e, se raccordent sur les montants 527a, ..., 527e, du côté opposé au profilé 24, à une hauteur choisie de sorte que la face inférieure des pattes de transmission se situe à affleurement du dos 17 de la lame souple 7 lorsque celle-ci repose sur une surface plane. Des pattes de transmission supplémentaires 528f et 528g sont formées aux extrémités longitudinales de la portion principale 29 de l'armature 523 du déflecteur 522.

Lorsque la lame souple 7 se déforme pour suivre l'évolution de la courbure du pare-brise, les ergots 521a, ..., 521e se déplacent dans les perçages oblongs 528a, ..., 528e, la déformation du déflecteur 522 ayant lieu sous l'action des pattes de transmission 528a, ..., 528g.

La mise en place du déflecteur 522 s'effectue en insérant les ergots dans les perçages oblongs de la plaque 504 puis en rapportant l'ensemble sur l'étrier principal 2 jusqu'à accrochage des languettes 505 et 506.

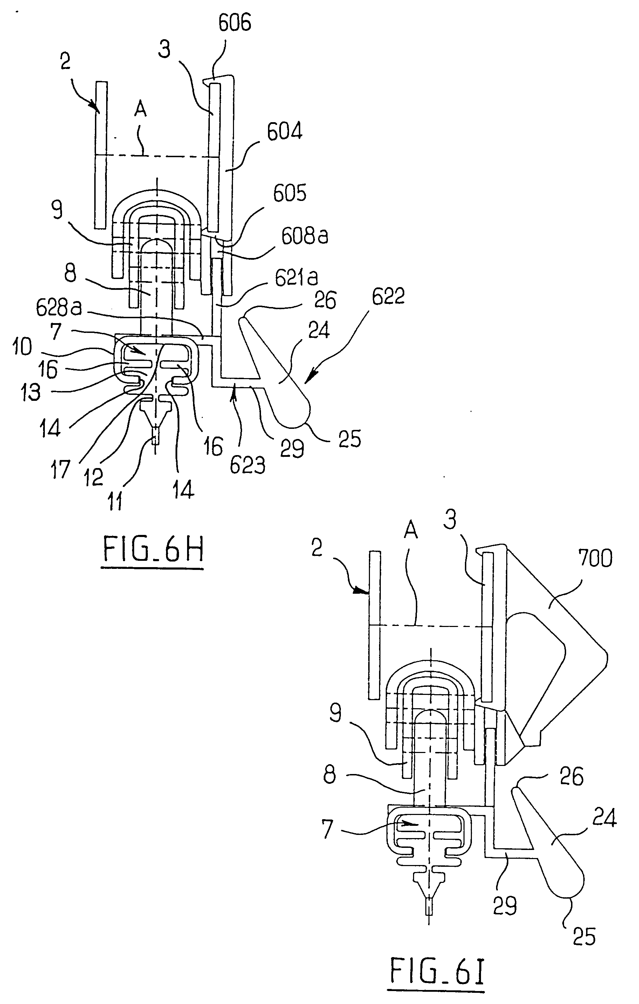

Le balai 601 représenté sur la figure 6E comporte une plaque 604 qui est rapportée sur une aile 3 de l'étrier principal 2. Les perçages oblongs 508a, ..., 508e de la plaque 504 sont remplacés dans cette variante d'exécution de l'invention par des logements respectivement référencés 608a, ..., 608e, formés dans l'épaisseur de la plaque 604 et débouchant sur son bord inférieur. La face de la plaque 604 par laquelle celle-ci est rapportée sur l'aile 3 de l'étrier principal 2 est munie de deux couples 605 et 606 de languettes élastiques, destinées à venir en prise respectivement avec les bords inférieur et supérieur de l'aile 3 dans sa région médiane pour retenir la plaque 604 contre l'étrier principal 2, comme représenté sur la figure 6H. L'armature rigide 623 du déflecteur 622 qui équipe le balai 601 représenté sur la figure 6E comporte des doigts de guidage associés chacun à un logement 608a, 608b, 608c, 608d et 608e, et respectivement référencés 621a, ..., 621e. Ces doigts de guidage sont plans, s'étendent perpendiculairement à l'axe A et se raccordent perpendiculairement à leur partie inférieure sur la portion principale 29, le long du bord longitudinal de cette dernière opposé au profilé 24. Ils présentent des bords supérieurs convergeant l'un vers l'autre. Ces bords convergents sont réunis supérieurement par un arrondi. Des pattes de transmission de déformation de la lame souple 7 au déflecteur 622 se raccordent perpendiculairement sur les doigts de guidage, du côté opposé au profilé 24 et sont respectivement référencées 628a, ..., 628e. Plus précisément, ils se raccordent sur les doigts de guidage à la base des bords convergeant, à une hauteur choisie de sorte que la face inférieure des pattes de transmission se situe à affleurement du dos 17 de la lame souple 7 lorsque cette dernière repose sur une surface plane.

Comme pour la réalisation de la figure 6A, des pattes de transmission supplémentaires 628f et 628g sont formées aux extrémités longitudinales de la portion principale 29.

La plaque qui est rapportée sur l'étrier principal 2 peut avantageusement servir de support à des moyens d'arrosage du pare-brise, comme illustré sur la figure 6I. Dans la réalisation de cette figure, la plaque comporte sur sa face opposée à l'étrier principal 2 des moyens de support 700 d'une buse d'arrosage du pare-brise.

Finalement, l'invention permet de guider en déformation un déflecteur souple dans un plan parallèle au plan de déformation de la lame souple, sans rencontrer les inconvénients des dispositifs connus.

Elle n'est pas limitée aux modes de réalisation décrits, qui ne s'excluent pas mutuellement. On peut réaliser un balai conforme à l'invention qui incorpore des moyens de guidage différents, empruntés à plusieurs modes de réalisation décrits, pour autant que l'invention demeure dans le cadre défini par les revendications.

## Revendications

1. Dispositif d'essuyage pour véhicule, notamment un véhicule automobile, comprenant :
. un balai (1 ; 101 ; 201 ; 301 ; 401 ; 501 ; 601) de forme allongée, incorporant une lame souple (7) destinée à venir au contact d'une surface courbe à essuyer, cette lame souple (7) étant montée sur le balai avec une possibilité de déformation dans un plan pour épouser la courbure de la surface à essuyer, et
. un déflecteur souple (22 ; 122 ; 222 ; 322 ; 422 ; 522 ; 622), de forme allongée, conformé pour former un masque tendant à dévier l'écoulement des flux d'air pour exercer, à des vitesses élevées du véhicule, une force aérodynamique tendant à maintenir la lame souple (7) au contact de la surface à essuyer, ce déflecteur étant monté avec une possibilité de déformation sur le balai et étant commandé en déformation par la lame souple,
le dispositif comportant en au moins trois points de la longueur du balai des moyens de transmission au déflecteur de la déformation de la lame souple, de sorte que le déflecteur accompagne la déformation de la lame souple, le balai étant muni de premiers moyens de guidage et le déflecteur de seconds moyens de guidage, agencés pour coopérer avec les premiers moyens de guidage en au moins deux points de la longueur du balai, et guider le déflecteur en déformation caractérisé en ce que les seconds moyens de guidage sont agencés pour coopérer en coulissement avec les premiers moyens de guidage.

2. Dispositif selon la revendication 1, caractérisé en ce que les premiers et seconds moyens de guidage sont agencés pour guider le déflecteur en déformation dans un plan sensiblement parallèle au plan de déformation de la lame souple.

3. Dispositif selon l'une des revendications 1 et 2, caractérisé en ce que le déflecteur comporte une armature (23 ; 123 ; 223 ; 323 ; 423 ; 523 ; 623) sur un bord longitudinal de laquelle est de préférence surmoulé (en variante rapporté) un profilé (24) de préférence en matériau élastomère, les moyens de transmission de la déformation de la lame souple au déflecteur comportant des pattes (28a, ..., 28c ; 128a, ..., 128g ; 228a, ..., 228d ; 328a, ..., 328g ; 428a, ..., 428g ; 528a, ..., 528g ; 628a, ..., 628g) de préférence venues de formation avec (en variante rapportées sur) l'armature du déflecteur et conformées pour être entraînées en déplacement par la lame souple (7).

4. Dispositif selon l'une des revendications 1 à 3, caractérisé en ce qu'il comporte des doigts de guidage (21a, ..., 21f ; 121a, ..., 121g ; 221a, .... 221h ; 321a, ..., 321g ; 421a, ..., 421g ; 621a, ... 621e) formant saillie sur l'armature du déflecteur, s'étendant transversalement à la direction longitudinale de cette dernière pour former des seconds moyens de guidage.

5. Dispositif selon les revendications 3 et 4, caractérisé en ce qu'au moins un doigt de guidage (121a, ..., 121g ; 321a, ..., 321g ; 421a, ..., 421g ; 621a, ..., 621e) se raccorde sur le reste de l'armature au voisinage d'une patte de transmission de la déformation de la lame souple au déflecteur.

6. Dispositif selon l'une des revendications 4 et 5, caractérisé en ce que lesdits doigts de guidage sont plans et orientés parallèlement au plan de déformation de la lame souple.

7. Dispositif selon l'une des revendications 4 à 6, caractérisé en ce qu'il comporte au moins un ajour formé dans une patte de guidage pour recevoir à coulissement un doigt de guidage et former des premiers moyens de guidage.

8. Dispositif selon l'une des revendications 1 à 7, caractérisé en ce que la lame souple (7) est portée par au moins deux étriers secondaires (8) reliés de façon articulée, autour d'axes de pivotement perpendiculaires à son plan de déformation, à un étrier principal (2 ; 402).

9. Dispositif selon la revendication 8, caractérisé en ce que la lame souple (7) est portée par quatre étriers secondaires (8) articulés en leur milieu aux extrémités longitudinales de deux étriers intermédiaires (9 ; 409), eux-mêmes articulés en leur milieu aux extrémités longitudinales d'un étrier principal (2 ; 402).

10. Dispositif selon l'une des revendications 8 et 9, caractérisé en ce qu'il comporte des pattes de guidage (20a, ..., 20f) venues de formation avec des pièces d'articulation (18a, 18c, 18d, 18f, 19b, 19c) rapportées sur les extrémités longitudinales d'au moins un étrier, ces pattes de guidage s'étendant latéralement en direction du déflecteur pour former des premiers moyens de guidage.

11. Dispositif selon l'une des revendications 8 et 9, caractérisé en ce qu'il comporte des inserts (105a, ..., 105c, 105e, ..., 105g) présentant une partie supérieure à engager sur un tourillon assurant l'articulation entre deux étriers, et une partie inférieure s'étendant latéralement en direction du déflecteur pour former des premiers moyens de guidage.

12. Dispositif selon l'une des revendications 8 et 9, les étriers secondaires (8) étant munis à leurs extrémités longitudinales de griffes (10) de maintien de la lame souple (7), caractérisé en ce que les griffes (10) présentent une partie (214) s'étendant latéralement en direction du déflecteur pour former des premiers moyens de guidage.

13. Dispositif selon l'une des revendications 1 à 9, caractérisé en ce qu'il comporte des pattes de guidage (310a, ..., 310g) portées par la lame souple (7), ces pattes de guidage s'étendant latéralement en direction du déflecteur pour former des premiers moyens de guidage.

14. Dispositif selon la revendication 13, caractérisé en ce que les pattes de guidage sont portées par des arceaux rapportés chacun sur la lame souple de façon adjacente à une patte de transmission de la déformation de la lame souple au déflecteur.

15. Dispositif selon l'une des revendications 8 et 9, les étriers présentant deux ailes s'étendant en regard l'une de l'autre et réunies par un dos généralement perpendiculaire aux ailes, caractérisé en ce qu'au moins un étrier présente au moins une languette venue de formation avec une aile et recourbée à angle droit pour former des premiers moyens de guidage.

16. Dispositif selon l'une des revendications 1 à 15, caractérisé en ce que lesdits premiers moyens de guidage comportent des pattes de guidage ajourées pour le guidage en translation d'un doigt de guidage porté par le déflecteur.

17. Dispositif selon l'une des revendications 1 à 9, caractérisé en ce que lesdits premiers moyens de guidage sont venus de formation avec une plaque (504 ; 604) en matière plastique, rapportée sur le balai (501 ; 601) et s'étendant généralement parallèlement au plan de déformation de la lame souple.

18. Dispositif selon la revendication 17, caractérisé en ce que lesdits premiers moyens de guidage sont constitués par des perçages oblongs (508a, ..., 508e) de la plaque (504), dans lesquels peuvent se déplacer des ergots de guidage portés par l'armature du déflecteur, ces ergots s'étendant parallèlement à l'axe A.

19. Dispositif selon la revendication 17, caractérisé en ce que lesdits premiers moyens de montage sont constitués par des logements (608a, ..., 608e) formés dans l'épaisseur de la plaque (604).

20. Dispositif selon l'une des revendications 17 à 19, caractérisé en ce que la plaque (504 ; 604) incorpore des moyens de support (700) d'au moins une buse d'arrosage de la surface à essuyer.

21. Dispositif selon l'une des revendications précédentes, caractérisé en ce que lesdits points de la longueur du balai associés aux moyens de guidage sont au moins au nombre de trois.

## Claims

1. Wiper device for a vehicle, notably a motor vehicle, comprising:
. an arm (1; 101; 201; 301; 401; 501; 601), of elongate shape, incorporating a flexible blade (7) designed to come into contact with a curved surface to be wiped, this flexible blade (7) being mounted on the arm with a possibility of deforming in one plane in order to match the curvature of the surface to be wiped, and
. a flexible deflector (22; 122; 222; 322; 422; 522; 622), of elongate shape, shaped so as to form a mask tending to divert the flow of the airflows in order to exert, at high speeds of the vehicle, an aerodynamic force tending to keep the flexible blade (7) in contact with the surface to be wiped, this deflector being mounted with a possibility of deformation on the arm and being controlled under deformation by the flexible blade,
the device having, at at least three points on the length of the arm, means of transmitting the deformation of the flexible blade to the deflector, so that the deflector accompanies the deformation of the flexible blade, the arm being provided with first guidance means and the deflector with second guidance means, arranged so as to cooperate with the first guidance means at at least two points on the length of the arm, and to guide the deflector under deformation, characterised in that the second guidance means are arranged so as to cooperate in sliding with the first guidance means.

2. Device according to Claim 1, characterised in that the first and second guidance means are arranged so as to guide the deflector under deformation in a plane substantially parallel to the deformation plane of the flexible blade.

3. Device according to one of Claims 1 and 2, characterised in that the deflector has a frame (23; 123; 223; 323; 423; 523; 623), on a longitudinal edge of which there is preferably moulded (or in a variant attached) a profiled section (24) preferably made from elastomeric material, the means of transmitting the deformation of the flexible blade to the deflector having lugs (28a,..., 28c; 128a, ..., 128g; 228a, ..., 228d; 328a, ..., 328g; 428a, ..., 428g; 528a, ..., 528g; 628a, ... 628g) preferably formed along with (or in a variant attached to) the frame of the deflector and shaped so as to be driven in movement by the flexible blade (7).

4. Device according to one of Claims 1 to 3, characterised in that it has guidance fingers (21a, ..., 21f; 121a, ..., 121g; 221a, ..., 221h; 321a, ..., 321g; 421a, ..., 421g; 621a, ..., 621e) forming a projection on the frame of the deflector, extending transversely to the longitudinal direction of the latter in order to form second guidance means.

5. Device according to Claims 3 and 4, characterised in that at least one guidance finger (121a, ..., 121g; 321a, ..., 321g; 421a, ..., 421g; 621a, ..., 621e) is connected to the rest of the frame in the vicinity of a lug transmitting the deformation of the flexible blade to the deflector.

6. Device according to one of Claims 4 and 5, characterised in that the said guidance fingers are flat and oriented parallel to the deformation plane of the flexible blade.

7. Device according to one of Claims 4 to 6, characterised in that it has at least one opening formed in a guidance lug for slidably receiving a guidance finger and forming first guidance means.

8. Device according to one of Claims 1 to 7, characterised in that the flexible blade (7) is carried by at least two secondary yokes (8) connected so as to be articulated, about pivot axes perpendicular to its deformation plane, on a main yoke (2; 402).

9. Device according to Claim 8, characterised in that the flexible blade (7) is carried by four secondary yokes (8) articulated at their middle on the longitudinal ends of two intermediate yokes (9; 409), themselves articulated at their middle on the longitudinal ends of a main yoke (2; 402).

10. Device according to one of Claims 8 and 9, characterised in that it has guidance lugs (20a, ..., 20f) formed along with the articulation pieces (18a, 18c, 18d, 18f, 19b, 19c) attached to the longitudinal ends of at least one yoke, these guidance lugs extending laterally in the direction of the deflector in order to form first guidance means.

11. Device according to one of Claims 8 and 9, characterised in that it has inserts (105a, ..., 105c, 105e, ..., 105g) having a top part to be engaged on a journal providing the articulation between two yokes, and a bottom part extending laterally in the direction of the deflector in order to form first guidance means.

12. Device according to one of Claims 8 and 9, the secondary yokes (8) being provided, at their longitudinal ends, with claws (10) for holding the flexible blade (7), characterised in that the claws (10) have a part (214) extending laterally in the direction of the deflector in order to form first guidance means.

13. Device according to one of Claims 1 to 9, characterised in that it has guidance lugs (310a, ..., 310g) carried by the flexible blade (7), these guidance lugs extending laterally in the direction of the deflector in order to form first guidance means.

14. Device according to Claim 13, characterised in that the guidance lugs are carried by bows each attached to the flexible blade adjacent to a lug transmitting the deformation of the flexible blade to the deflector.

15. Device according to one of Claims 8 and 9, the yokes having two flanges extending opposite each other and joined by a web generally perpendicular to the flanges, characterised in that at least one yoke has at least one tongue formed along with a flange and curved at a right angle in order to form first guidance means.

16. Device according to one of Claims 1 to 15, characterised in that the said first guidance means include pierced guidance lugs for the guidance in translation of a guidance finger carried by the deflector.

17. Device according to one of Claims 1 to 9, characterised in that the said first guidance means are formed along with a plate (504; 604) made from plastic material, attached to the arm (501; 601) and extending generally parallel to the deformation plane of the flexible blade.

18. Device according to Claim 17, characterised in that the said first guidance means consist of oblong openings (508a, ..., 508e) in the plate (504), in which guidance pins carried by the deflector frame can move, these pins extending parallel to the axis A.

19. Device according to claim 17, characterised in that the said first mounting means consist of recesses (608a, ..., 608e) formed in the thickness of the plate (604).

20. Device according to one of Claims 17 to 19, characterised in that the plate (504; 604) incorporates means (700) of supporting at least one nozzle for spraying the surface to be wiped.

21. Device according to one of the preceding claims, characterised in that the said points on the length of the arm associated with the guidance means are at least three in number.

## Patentansprüche

1. Wischvorrichtung für ein Fahrzeug, insbesondere ein Kraftfahrzeug, umfassend:
. ein Wischblatt (1; 101; 201; 301; 401; 501; 601) mit länglicher Form mit einer flexiblen Wischleiste (7), die dazu bestimmt ist, mit einer zu wischenden gekrümmten Fläche in Kontakt zu kommen, wobei diese flexible Wischleiste (7) auf dem Wischblatt mit einer Verformungsmöglichkeit in einer Ebene angebracht ist, um sich an die Krümmung der zu wischenden Fläche anzupassen, und
. einen flexiblen Windabweiser (22; 122; 222; 322; 422; 522; 622) mit länglicher Form, der so gestaltet ist, daß er eine Abdeckung bildet, die die Strömung der Luftströme ablenkt, um bei hohen Geschwindigkeiten des Fahrzeugs eine aerodynamische Kraft auszuüben, um die flexible Wischleiste (7) mit der zu wischenden Fläche in Kontakt zu halten, wobei dieser Windabweiser mit einer Verformungsmöglichkeit auf dem Wischblatt angebracht ist und durch die flexible Wischleiste auf Verformung beansprucht wird,
wobei die Vorrichtung an mindestens drei Punkten der Länge des Wischblatts Mittel zur Übertragung der Verformung der flexiblen Wischleiste auf den Windabweiser umfaßt, so daß der Windabweiser die Verformung der flexiblen Wischleiste nachvollzieht, während das Wischblatt mit ersten Führungsmitteln und der Windabweiser mit zweiten Führungsmitteln versehen ist, die angeordnet sind, um mit den ersten Führungsmitteln an mindestens zwei Punkten der Länge des Wischblatts zusammenzuwirken und den Windabweiser in seiner Verformung zu führen,
**dadurch gekennzeichnet,** daß die zweiten Führungsmittel angeordnet sind, um gleitend verschiebbar mit den ersten Führungsmitteln zusammenzuwirken.

2. Vorrichtung nach Anspruch 1 , **dadurch gekennzeichnet,** daß die ersten und die zweiten Führungsmittel angeordnet sind, um den Windabweiser in seiner Verformung in einer Ebene zu führen, die in etwa parallel zur Verformungsebene der flexiblen Wischleiste verläuft.

3. Vorrichtung nach einem der Ansprüche 1 und 2, **dadurch gekennzeichnet,** daß der Windabweiser eine Fassung (23; 123; 223; 323; 423; 523; 623) umfaßt, an deren Längskante ein vorzugsweise aus Elastomermaterial ausgeführtes Profil (24) vorzugsweise aufgeformt (als Variante angefügt) ist, wobei die Mittel zur Übertragung der Verformung der flexiblen Wischleiste auf den Windabweiser Ansätze (28a, ..., 28c; 128a, ..., 128g; 228a, ..., 228d; 328a, ..., 328g; 428a, ..., 428g; 528a, ..., 528g; 628a,..., 628g) umfassen, die vorzugsweise einstückig an der Fassung des Windabweisers angeformt (als Variante daran angefügt) und so gestaltet sind, daß sie gleitend verschiebbar durch die flexible Wischleiste (7) mitgenommen werden.

4. Vorrichtung nach einem der Ansprüche 1 bis 3, **dadurch gekennzeichnet,** daß sie Führungsfinger (21a, ..., 21f; 121a, ..., 121g; 221a, ..., 221h; 321a, ..., 321g; 421a, ..., 421g; 621a, ..., 621e) umfaßt, die an der Fassung des Windabweisers vorstehen und sich quer zur Längsrichtung dieser Fassung erstrecken, um zweite Führungsmittel zu bilden.

5. Vorrichtung nach den Ansprüchen 3 und 4 , **dadurch gekennzeichnet,** daß sich mindestens ein Führungsfinger (121a, ..., 121g; 321a, ..., 321g; 421a, ..., 421g; 621a, ..., 621e) an den Rest der Fassung in der Nähe eines Ansatzes zur Übertragung der Verformung der flexiblen Wischleiste auf den Windabweiser anschließt.

6. Vorrichtung nach einem der Ansprüche 4 und 5, **dadurch gekennzeichnet,** daß die besagten Führungsfinger eben und parallel zur Verformungsebene der flexiblen Wischleiste ausgerichtet sind.

7. Vorrichtung nach einem der Ansprüche 4 bis 6, **dadurch gekennzeichnet,** daß sie mindestens einen Durchbruch enthält, der in einem Führungsansatz ausgebildet ist, um gleitend verschiebbar einen Führungsfinger aufzunehmen und erste Führungsmittel zu bilden.

8. Vorrichtung nach einem der Ansprüche 1 bis 7, **dadurch gekennzeichnet,** daß die flexible Wischleiste (7) an mindestens zwei Sekundärbügeln (8) angebracht ist, die gelenkig um zu ihrer Verformungsebene senkrechte Schwenkachsen mit einem Hauptbügel (2; 402) verbunden sind.

9. Vorrichtung nach Anspruch 8 , **dadurch gekennzeichnet**, daß die flexible Wischleiste (7) an vier Sekundärbügeln (8) angebracht ist, die in ihrer Mitte an den Längsenden von zwei Zwischenbügeln (9; 409) angelenkt sind, die ihrerseits in ihrer Mitte an den Längsenden eines Hauptbügels (2; 402) angelenkt sind.

10. Vorrichtung nach einem der Ansprüche 8 und 9,**dadurch gekennzeichnet,** daß sie Führungsansätze (20a, ..., 20f) umfaßt, die einstückig an Gelenkteilen (18a, 18c, 18d, 18f, 19b, 19c) angeformt sind, die an den Längsenden mindestens eines Bügels angefügt sind, wobei sich diese Führungsansätze seitlich in Richtung des Windabweisers erstrecken, um erste Führungsmittel zu bilden.

11. Vorrichtung nach einem der Ansprüche 8 und 9,**dadurch gekennzeichnet,** daß sie Einsätze (105a, ..., 105c, 105e, ..., 105g) umfaßt, die einen oberen Teil, der an einem Zapfen für die Glenkverbindung zwischen zwei Bügeln einzusetzen ist, und einen unteren Teil aufweisen, der sich seitlich in Richtung des Windabweisers erstreckt, um erste Führungsmittel zu bilden.

12. Vorrichtung nach einem der Ansprüche 8 und 9, wobei die Sekundärbügel (8) an ihren Längsenden mit Haltekrallen (10) für die flexible Wischleiste (7) versehen sind, **dadurch gekennzeichnet,** daß die Krallen (10) einen Teil (214) aufweisen, der sich seitlich in Richtung des Windabweisers erstreckt, um erste Führungsmittel zu bilden.

13. Vorrichtung nach einem der Ansprüche 1 bis 9,**dadurch gekennzeichnet,** daß sie Führungsansätze (310a, ..., 310g) umfaßt, die an der flexiblen Wischleiste (7) angebracht sind, wobei sich diese Führungsansätze seitlich in Richtung des Windabweisers erstrecken, um erste Führungsmittel zu bilden.

14. Vorrichtung nach Anspruch 13, **dadurch gekennzeichnet**, daß die Führungsansätze an Klammern angebracht sind, die jeweils an der flexiblen Wischleiste, angrenzend an einen Ansatz zur Übertragung der Verformung dar flexiblen Wischleiste auf den Windabweiser, angefügt sind.

15. Vorrichtung nach einem der Ansprüche 8 und 9, Wobei die Bügel zwei Schenkel aufweisen, die sich einander gegenüber erstrecken und durch einen Rücken miteinander verbunden sind, der allgemein senkrecht zu den Schenkeln verläuft, **dadurch gekennzeichnet**, daß mindestens ein Bügel mindestens eine Zunge aufweist, die einstückig an einem Schenkel angeformt und rechtwinklig gekrümmt ist, um die ersten Führungsmittel zu bilden.

16. Vorrichtung nach einem der Ansprüche 1 bis 15, **dadurch gekennzeichnet**, daß die besagten ersten Führungsmittel durchbrochene Führungsansätze für die verschiebbare Führung eines am Windabweiser angebrachten Führungsfingers umfassen.

17. Vorrichtung nach einem der Ansprüche 1 bis 9,**dadurch gekennzeichnet**, daß die besagten ersten Führungsmittel einstückig an einer Platte (504; 604) aus Kunststoff angeformt sind, die am Wischblatt (501; 601) angefügt ist und sich allgemein parallel zur Verformungsebene der flexiblen Wischleiste erstreckt.

18. Vorrichtung nach Anspruch 17, **dadurch gekennzeichnet**, daß die besagten ersten Führungsmittel aus länglichen Bohrungen (508a, ..., 508e) der Platte (504) bestehen, in denen sich Führungsnasen verschieben können, die an der Fassung des Windabweisers angebracht sind, wobei sich diese Führungsnasen parallel zur Achse A erstrecken.

19. Vorrichtung nach Anspruch 17, **dadurch gekennzeichnet**, daß die besagten ersten Führungsmittel aus Aufnahmen (608a, ..., 608e) bestehen, die in der Dicke der Platte (604) ausgebildet sind.

20. Vorrichtung nach einem der Ansprüche 17 bis 19, **dadurch gekennzeichnet**, daß die Platte (504; 604) Lagermittel (700) für mindestens eine Spritzdüse zum Besprühen der zu wischenden Fläche enthält.

21. Vorrichtung nach einem der vorangehenden Ansprüche, **dadurch gekennzeichnet**, daß es sich bei den besagten Punkten der Länge der Wischleiste, die den Führungsmitteln zugeordnet sind, um mindestens drei Punkte handelt.
